# EUROPEAN PATENT APPLICATION

(11) **EP 0 708 329 A1**
(43) Date of publication of application: **24.04.1996**
(21) Application number: 95115081.2
(22) Date of filing: 25.09.1995
(51) Int. Cl.: G01N 27/447

(54) **Capillary electrophoresis apparatus and its method**

(30) Priority: 28.09.1994 JP 233805/94
(71) Applicant: Hewlett-Packard Company, Palo Alto, California 94304 (US)
(72) Inventor: Soga, Tomoyoshi, Mitakashi, Tokyo (JP); Inoue, Yoshinori, Mitakashi, Tokyo (JP)
(74) Representative: Liesegang, Roland, Dr.-Ing.

(57) **Abstract**

Capillary electrophoresis apparatus includes a buffer solution filled in a capillary and means for applying a high voltage across the capillary so that when a sample is introduced from one end of the capillary, a sample tends to separate into components, e.g. ions, as migrates toward the other end of the capillary and these sample components are subsequently detected at this end of the capillary. The inner wall surface of the capillary is coated with a polymer. Such polymer may be preferably hydrophilic and uncharged polymer, which may be selected from a polyol, such as polyethylene glycol, polypropylene glycol,polyacrylamide, polyvinyl alcohol, polyvinyl pyrrolidone, and polyglycerin and a polysaccharide, such as pullulan, dextran. The inner wall surface remains electrically neutral and an electroosmotic flow , which tends to interfere with a migration of anions, can be substantially suppressed. Therefore, anions can be measured easily without an addition of conventional reagents in a buffer solution.

## Description

### Field of the Invention

This invention relates to a capillary electrophoresis apparatus wherein a buffer solution is filled in a capillary and a high voltage is applied to both ends of the capillary so that when a sample is introduced from one end of the capillary, a sample tends to separate into components, e.g. ions, as migrates toward the other end of the capillary and these sample components are subsequently detected at this end of the capillary.

### Background of the Invention

As is well-known, capillary electrophoresis has been utilized to determine a very small amount of sample components in order of nanoliter (nl) or picoliter (pl). This analytical method shows the maximum sample separation resolution. In other words, the number of theoretical plates in capillary electrophoresis is considerably large compared with that of liquid chromatography in general and thus it allows analyzing very small amount of sample components.

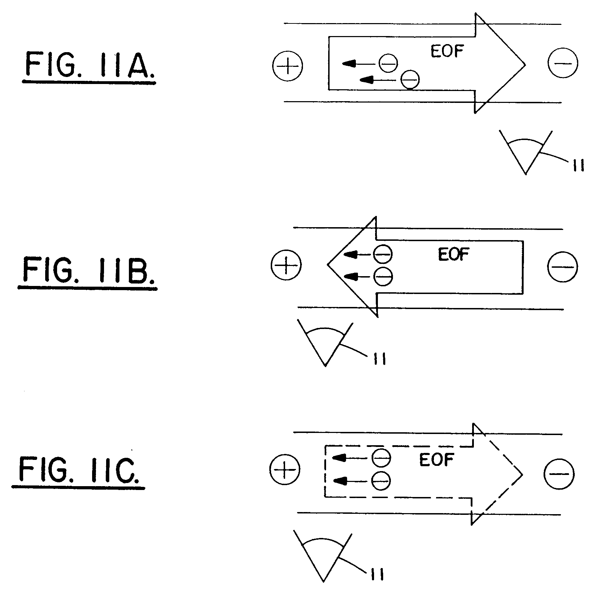

Fig. 10 is a diagram of the structure of a conventional capillary electrophoresis apparatus. In the drawing, 1 is a first buffer solution reservoir which contains a buffer solution, for example, a phosphate buffer solution. 2 is a second buffer solution reservoir with a buffer solution, for example, a phosphate buffer solution. Positive electrode (anode) 4 of high voltage generator 3 is immersed in the first buffer solution reservoir 1 while negative electrode (cathode) 5 is immersed in the second buffer solution reservoir 2. 6 is a capillary. One end of capillary 6 is immersed in the first buffer solution reservoir 1 and the other end is immersed in the second buffer solution reservoir 2. UV (ultra violet) detector 7 is provided for detecting separated sample components and located at the capillary 6 proximate to the second buffer solution reservoir 2.

By means of this structure, when a specific voltage is applied between the positive electrode 5 and the negative electrode 4 by the high voltage generator 3, a buffer solution in the first buffer solution reservoir 1 moves toward to the second buffer solution reservoir 2 through capillary 6 in response to its electrophoretic mobility and an electroosmotic flow occurred within a capillary. The separation mechanism of capillary electrophoresis has been studied over many years and well known to those in the art.

When a sample is introduced into one end of capillary 6 at the first buffer solution reservoir 1, it also tends to move toward the second buffer solution reservoir 2 with an electroosmotic flow occurred within a capillary and some sample components' electrophoretic mobilities. The migration velocity of sample components varies with ion radius and ionic charge of the hydrated sample ions. A sample tends to move as a band. Consequently, sample components which migrated through capillary 6 are detected by UV detector 7. Each sample components has a different migration time which may be depended on its ion radius and ionic charge.

For the above-described conventional electrophoresis apparatus, when a sample component is an anion or any chemical substance having negative ionic charge, such ion tends to migrate in an opposite direction of the electroosmotic flow (hereinafter referred as EOF). Thus, the analysis time may become very long or the detection of such ion may be impossible (please refer to Fig. 11a).

As shown in Fig. 11(b), one of conventional approaches is to reverse EOF by adding tertiary ammonium to a buffer solution. Another approach may be to hinder EOF by adding of high viscosity substance, such as Triton X-100 (available from WAKO, Osaka Japan) to a buffer solution, as shown in Figure 11(c).

However, there is a problem in these conventional methods shown in Fig. 11(b) and (c). EOF varies with the concentration and pH of a buffer solution (buffer). Such additional reagents also make a buffer solution more complex composition.

### SUMMARY OF THE INVENTION

The present invention provides capillary electrophoretic apparatus and its method wherein negatively charged ions (anions) of a sample can be measured with an optimal reproducibility.

In accordance with the present invention, capillary electrophoresis apparatus and method include a buffer solution in a capillary. High voltage is applied to both ends of the capillary in order to separate and analyze a sample that has been introduced into one end of the capillary. A polymer is coated on an inner wall surface of a capillary. Such polymer may be preferably hydrophilic and uncharged (electrically neutral) and which may be selected from polyols, such as polyethylene glycol, polypropylene glycol, polyacrylamide, polyvinyl alcohol, polyvinyl pyrrolidone and polyglycerin and polysaccharides, such as pullulan, dextran. By coating the inner wall surface of a capillary with such polymer, an adsorption of charged molecules on the inner wall surface of a capillary is prevented. The inner wall surface thus remains electrically neutral and EOF, which would interfere with the migration of anions, would not substantially occur. Consequently, anions can be easily determined without adding any reagent to a buffer solution as in conventional methods. Furthermore, since EOF would not be substantially generated, the reproducibility in electrophoresis apparatus can be desirably enhanced.

### DESCRIPTION OF THE DRAWINGS

Fig. 1 shows a structure of one embodiment for capillary electrophoresis apparatus of this invention.

Fig.2 is a cross section of a capillary in Fig. 1.

Fig.3 shows electropherograms measured by capillary electrophoresis apparatus in Fig. 1.

Fig. 4 shows electropherograms measured by capillary electrophoresis apparatus in Fig. 1 with polyethylene glycol polymer.

Fig. 5 shows electropherograms measured by capillary electrophoresis apparatus in Fig. 1 with DB-225.

Fig. 6 shows another electropherogram measured by capillary electrophoresis apparatus in Fig. 1 with DB-1.

Fig. 7 shows another electropherogram measured by capillary electrophoresis apparatus in Fig. 1.

Fig. 8 shows another electropherogram measured by capillary electrophoresis apparatus in Fig. 1.

Fig. 9 explains enhanced reproducibility of capillary electrophoresis apparatus in Fig. 1.

Fig. 10 shows a structure of a conventional capillary electrophoresis apparatus.

Fig. 11 explains problem in conventional anion detection.

### Detailed Description of the Preferred Embodiment

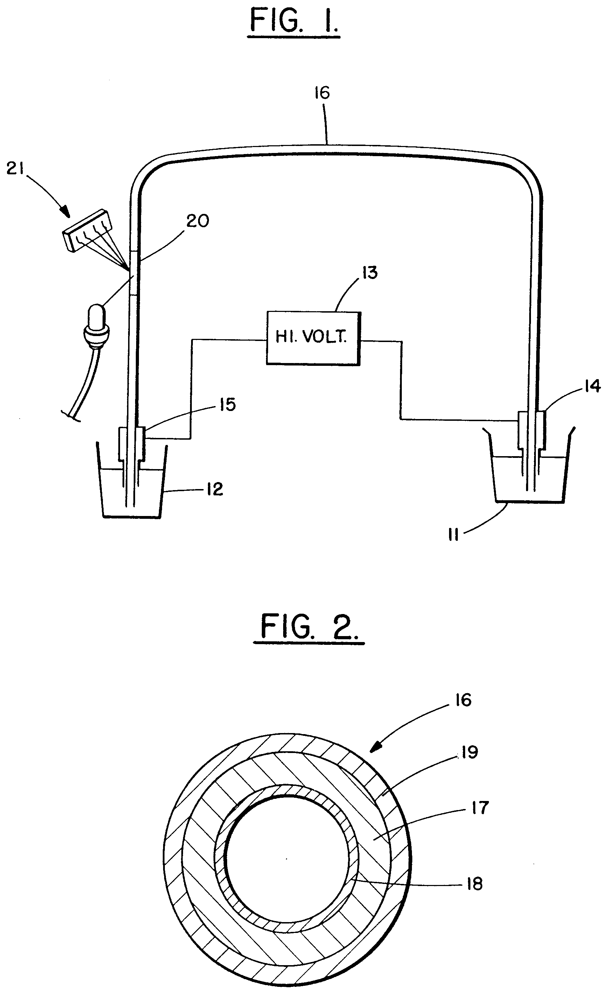

Fig. 1 is a structural diagram of One embodiment of an electrophoresis apparatus in accordance with the present invention. Fig. 2 shows a cross section of a capillary in Fig. 1. The electrophoresis apparatus of this invention is now explained with Fig. 1. In the drawing, 11 is a first buffer solution reservoir which preferably contains phosphate buffer solution, and 12 is a second buffer solution reservoir preferably having same phosphate buffer solution. A platinum electrode 14 of a high voltage generator 13 is immersed in the first buffer solution reservoir 11 while another platinum electrode 15 is immersed in the second buffer solution reservoir 12. 16 is a capillary. One end of the capillary is immersed in the first buffer solution reservoir 11 and the other end is immersed in the second buffer solution reservoir 12.

In a cross section of the capillary 16 as shown in Fig. 2, a polymer coating layer 18 is applied on an inner wall surface of a silica 17. Such polymer is preferably hydrophilic and uncharged polymer. For example, polyols, such as polyethylene glycol, polypropylene glycol, polyacrylamide, polyvinyl alcohol, polyvinyl pyrrolidone and polyglycerin and polysaccharides, such as pullulan, dextran. With this polymer on the inner wall surface of the silica, this surface remains electrically neutral and thus EOF, which would interfere with the migration of anions, may be suppressed and thus the reproducibility can be enhanced specially for an anion analysis. A coating layer 19 of polyimide is applied on an outer wall surface of the silica 17. A detection section 20 is provided on the capillary 6 where the coating layer 19 is peeled off and where it is proximate to the second buffer solution reservoir 12. An UV detector 21 is located at the detection section 20. Such UV detector 21 may be comprised of UV diode array detector or other UV detector.

The high voltage generator 13 can alter a polarity of applied voltage to electrodes 14 and 15. In the cation analysis, the electrode 14 may become a positive electrode and the electrode 15 may become a negative electrode. On detecting anions, the electrode 14 may be selected as a negative electrode and electrode 15 may be a positive electrode.

Experimental results of anions detection in accordance with the above-described capillary electrophoresis apparatus of this invention is now explained. The capillary 16 has an inner diameter of 50 µm, an outer diameter of 350 µm, and a length of 64.5 cm (a length to the detection section is 56 cm). Polyethylene glycol was selected for the polymer coating layer 18. 20 mM phosphate with pH 8.0 was used for a buffer solution. The applied voltage was -15 kV and a temperature of the capillary 16 was kept at 20°C. Halides, oxoacids and metal oxoacids were selected for a sample. A direct detection was carried out at 200 nm with UV detector 21 with pressurized injection method with an application of 50 mbar for 4 seconds.

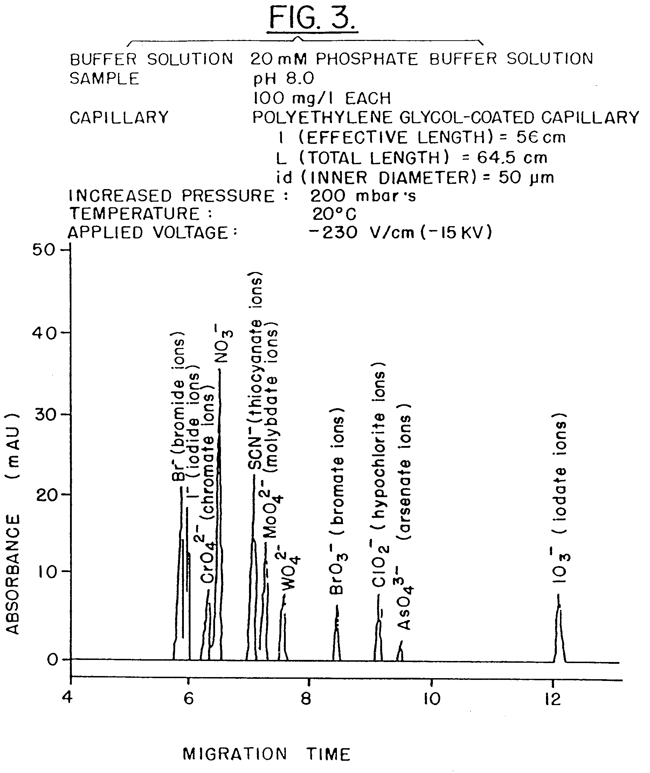

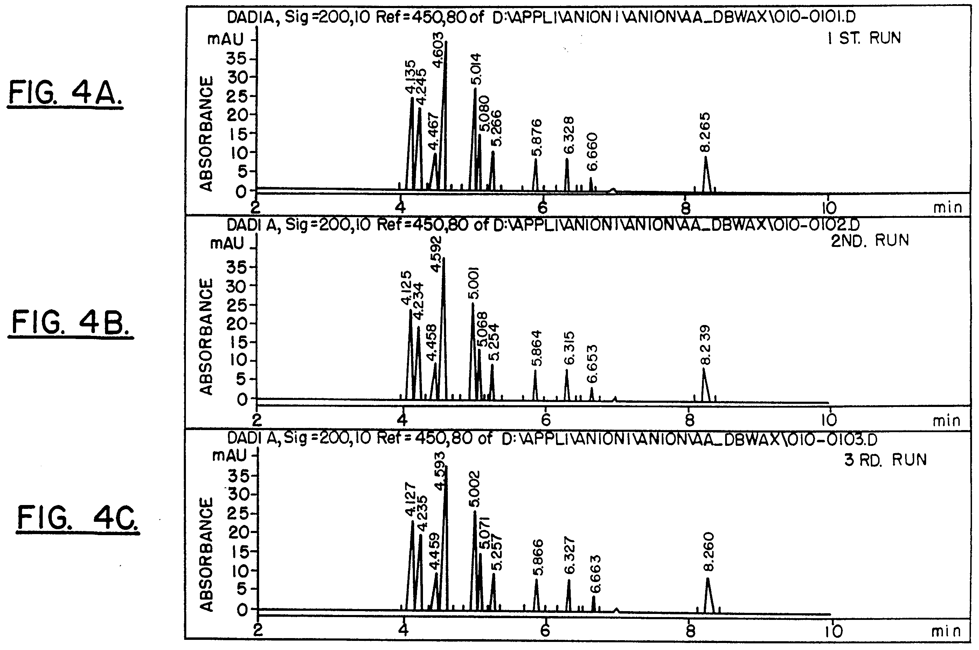

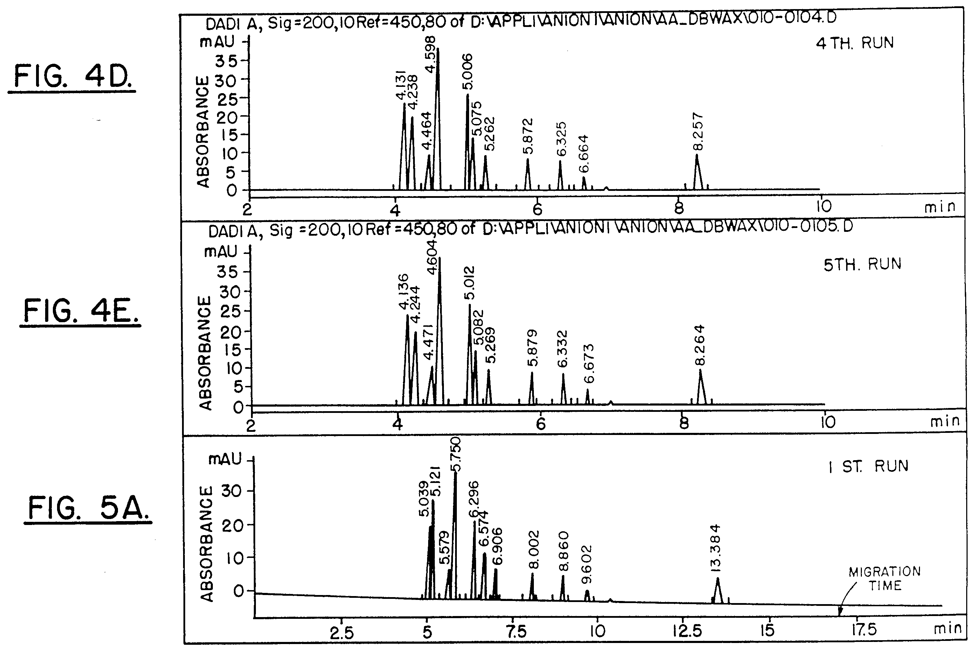

The resulted electropherogram is shown in Fig. 3. This electrophoretic run was repeated 5 times. As shown in Fig. 4, the reproducibility was confirmed. (Note that the migration time of each ions was not merely shifted over 5 repetitive runs and the area of each peak was substantially the same.)

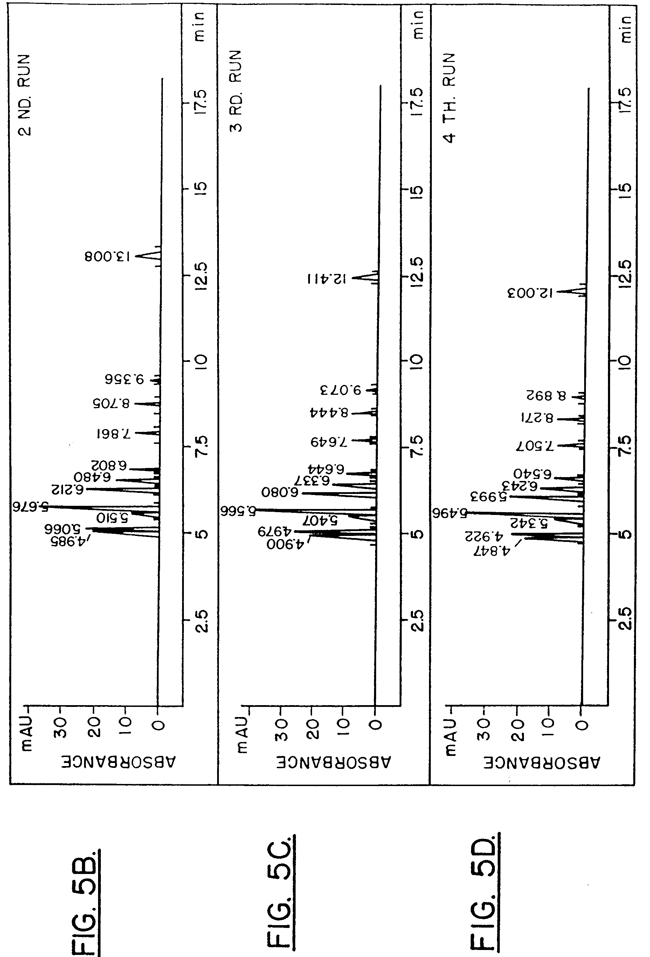

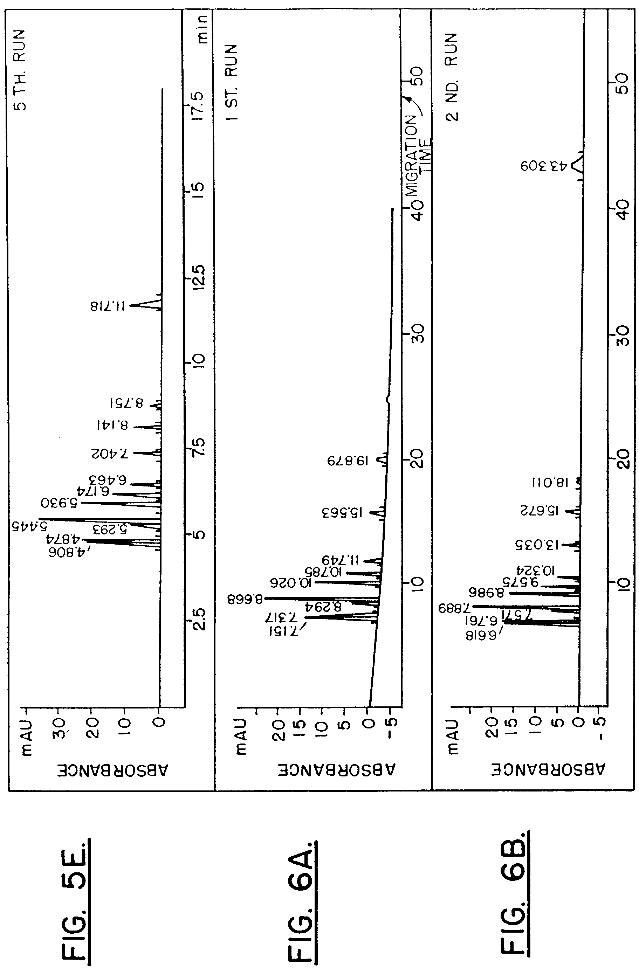

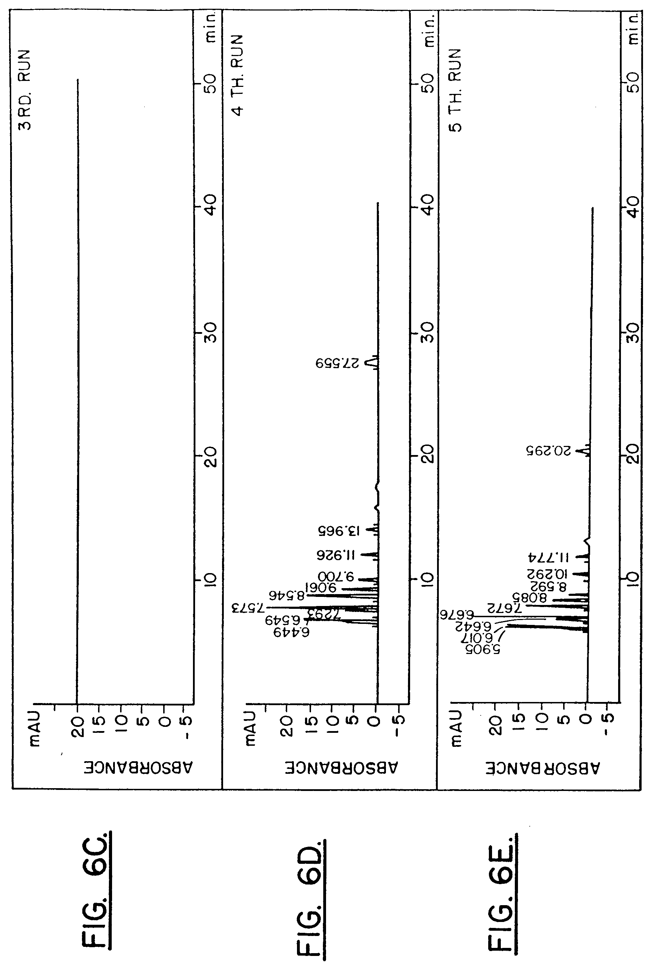

With various coating polymer, the electrophoretic separation was repeated 5 times respectively. Fig. 5 shows experimental results when DB-225 (50% cyanopropylphenyl methylpolysiloxane) was used as a polymer. Fig. 6 shows experimental results when DB-1 (dimethylpolysiloxane) was used as the polymer. DB-225 and DB-1 are available from J&W Science, CA, USA. Both of these polymer are hydrophobic.

In comparison with the results shown in Fig. 5 and 6, the capillary coated with polyethylene glycol (Fig. 4) exhibits superior reproducibility in both migration time and peak area.

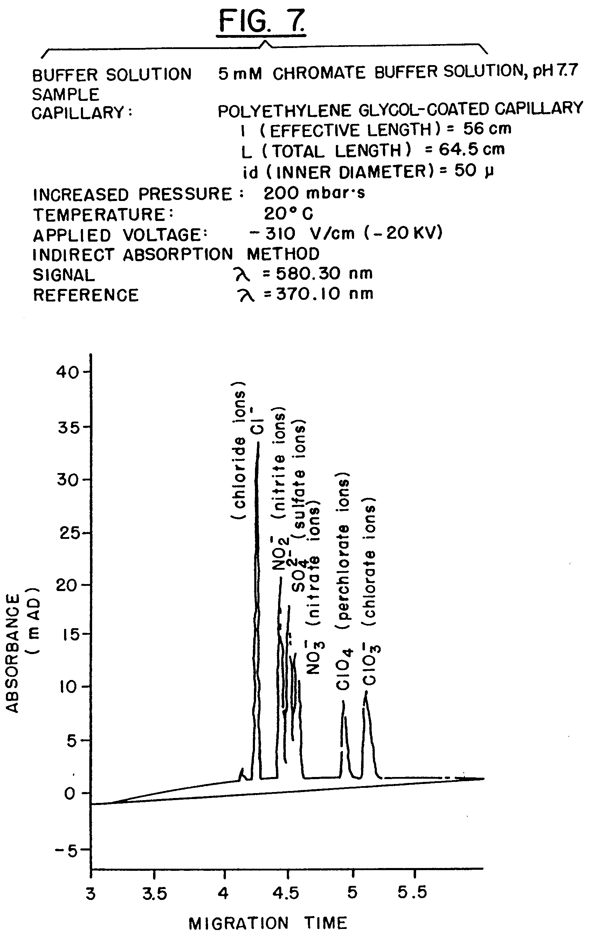

Any sample component which does not show UV absorption, such as Cl⁻, SO₄²⁻ could be detected by using chromate as a buffer solution and an indirect absorption method. The present invention could provide a good reproducibility. The indirect absorption method has been one of known detection methods for some sample component which does not show an UV absorption. In this method, a substance with high UV absorption, e.g. chromate is used and such component peak can be recognized with a decrease in measured absorption value. It is further processed to provide a positive peak value. Fig. 7 shows one experimental result of this detection method.

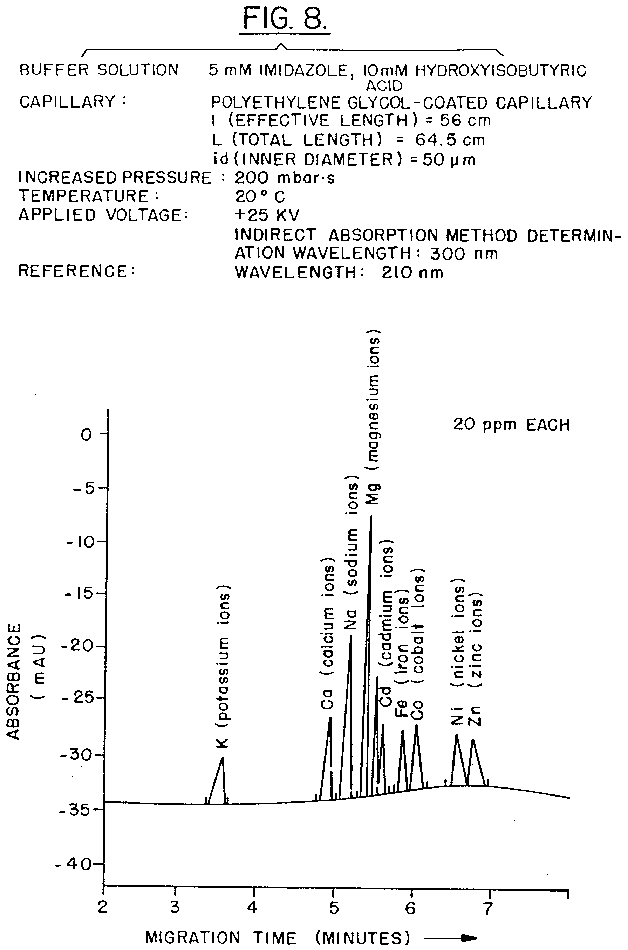

Alkali metals, alkaline-earth metals and transition metals were determined by the indirect absorption method. Good reproducibility has been observed. Fig. 8 shows one experimental result.

EOF was measured with a benzyl alcohol when polyethylene glycol was coated onto an inner wall surface of a capillary. Benzyl alcohol was not observed (eluted) over approximately 5 hours. Consequently, EOF was considered to be lower than 0.1 x 10⁻⁴ cm²/Vs. Thus, EOF was apparently suppressed into less than 1 / 40.

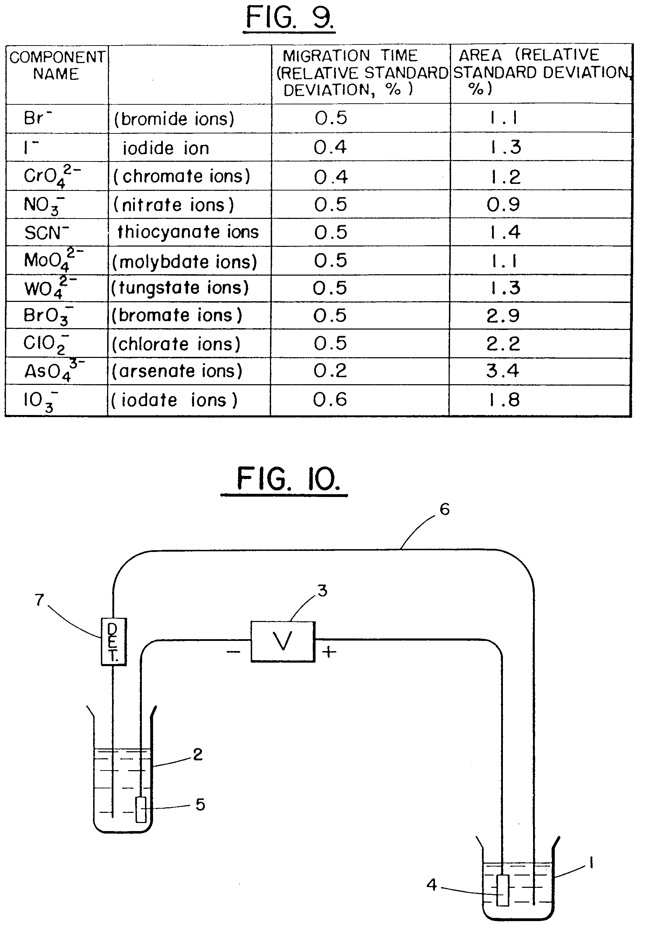

With afore-described structure wherein an inner wall surface is coated with a polymer, negatively charged sample ions (anions) can be easily measured. Furthermore, since EOF is substantially suppressed, a remarkable reproducibility can be attained. Fig. 9 shows relative standard deviations in % of migration time and peak area of various sample ions over 10 electrophoretic runs. The reproducibility in migration time of this embodiment was 0.2 to 0.6%, as shown in Figure 9.

In capillary electrophoresis apparatus of this invention wherein an inner wall surface is coated with a polymer, preferably hydrophilic polymers, an adsorption of charged molecules on the inner wall surface is prevented. The inner wall surface becomes electrically neutral and thus an electroosmotic flow, EOF, which interferes migrations of anions, would not substantially occur.

Accordingly, when anions are measured, this invention allows such measurement without conventionally adding any reagent in a buffer solution. EOF is substantially suppressed so that the reproducibility in migration time and peak area can be enhanced considerably.

It should be understood that the foregoing description is only illustrative of the invention. Various alternatives and modifications can be devised by those skilled in the art without departing from the invention. Accordingly, the present invention is intended to embrace all such alternatives, modifications and variances which fall within the scope of the appended claims.

## Claims

1. A capillary electrophoresis apparatus comprising:
a first buffer solution reservoir (11);
a second buffer solution reservoir (12);
a hollow capillary (16) having first and second ends, said capillary being connected between said first and second buffer solution reservoirs (11, 12);
means (13) for applying a voltage between said first and second ends of said capillary (16) to cause a migration of sample components within said capillary;
means (18) for suppressing an electroosmotic flow within said capillary (16); and
means (21) for detecting said sample components.

2. The capillary electrophoresis apparatus as recited in claim 1 wherein said suppressing means (18) is comprised of a polymer coated on an inner wall surface of said capillary (16) so that the inner wall surface is electrically neutralized.

3. The capillary electrophoresis apparatus as recited in claim 2 wherein said polymer is a hydrophilic polymer.

4. The capillary electrophoresis apparatus as recited in claim 3 wherein said polymer is polyol.

5. The capillary electrophoresis apparatus as recited in claim 4 wherein said polyol is selected from the group consisting of polypropylene glycol, polyacryl-amide, polyvinyl alcohol, polyvinyl pyrrolidone and polyglycerin.

6. The capillary electrophoresis apparatus as recited in claim 2 wherein said polymer is polysaccharide including pullulan and dextran.

7. A capillary electrophoresis method for an analysis of anions comprising the steps of:
(a) introducing a sample into a capillary (16) where a buffer solution is filled therein;
(b) applying a voltage across said capillary to cause a migration of anions; and
(c) suppressing an electroosmotic flow within said capillary (16) so that anions migrate with their electrophoretic mobilities.

8. A capillary electrophoresis method as recited in claim 7 wherein step (c) comprising electrically neutralizing an inner wall surface of said capillary (16) by coating a polymer (18) on said inner wall surface of said capillary.

9. An electrophoresis capillary used in a capillary electrophoresis apparatus for an analysis of anions comprising:
a hollow capillary (16) having first and second ends, an inner wall surface of said capillary being coated with hydrophilic polymer (18).

10. The electrophoresis capillary as recited in claim 9 wherein said hydrophilic polymer is selected from the group consisting of polypropylene glycol, polyacrylamide, polyvinyl alcohol, polyvinyl pyrrolidone and polyglycerin, pullulan and dextran.
